# EUROPEAN PATENT APPLICATION

(11) **EP 3 414 995 A1**
(43) Date of publication of application: **19.12.2018**
(21) Application number: 17389501.2
(22) Date of filing: 14.06.2017
(51) Int. Cl.: A01G 9/04, A01G 9/02, A01G 9/16

(54) **A GREENHOUSE POT AND USE OF A GREENHOUSE POT**

(71) Applicant: CombiPot Danmark ApS, 7100 Vejle (DK)
(72) Inventor: Vest, Niels Verner Mogens, 8270 Højbjerg (DK)
(74) Representative: Patentgruppen A/S

(57) **Abstract**

A greenhouse pot (1) comprising at least one plant pot (2) including at least one plant pot side (3) protruding upwards from a plant pot bottom (4) to form a pot having a top opening (5). The greenhouse pot (1) further includes a transparent upper pot (6) comprising at least one upper pot side (7) protruding downwards from an upper pot top (8) to form a pot having a bottom opening (9), wherein the transparent upper pot (6) is arranged to cover the top opening (5) and wherein the transparent upper pot (6) comprises one or more handle means (10). The greenhouse pot (1) also comprises one or more connection means (11) arranged to releasably connect the plant pot (2) and the transparent upper pot (6), and a saucer (12) connected to the plant pot (2) at the plant pot bottom (4).

## Description

### Field of the invention

The invention relates to a greenhouse pot comprising at least one plant pot including at least one plant pot side protruding upwards from a plant pot bottom to form a pot having a top opening. The invention also relates to use of a greenhouse pot.

### Background of the invention

Greenhouses are popular because it enables people to be at least partly self-sufficient regarding vegetables and fruit that typically requires a warmer climate to be grown efficiently.

However, in the cities people will typically not have enough open outside space to put up a traditional greenhouse.

Thus, from US 2015/0143743 A1 it is known to provide a planter with a transparent first cover and a second insulating cover. The first cover is connected to the planter and the second cover is connected to the first cover. However, planters of this design are expensive and difficult to handle.

It is therefore an object of the present invention to provide for a cost-effective technique for forming a handy and usable greenhouse pot.

### The invention

The invention provides for a greenhouse pot comprising at least one plant pot including at least one plant pot side protruding upwards from a plant pot bottom to form a pot having a top opening. The greenhouse pot further includes a transparent upper pot comprising at least one upper pot side protruding downwards from an upper pot top to form a pot having a bottom opening, wherein the transparent upper pot is arranger to cover the top opening and wherein the transparent upper pot comprises one or more handle means. The greenhouse pot also comprises one or more connection means arranged to releasably connect the plant pot and the transparent upper pot, and a saucer connected to the plant pot at the plant pot bottom.

Connecting a saucer to the bottom of the plant pot is advantageous in that excess water hereby can be collected in the saucer to increase the intervals between watering. And connecting the saucer to the plant pot and then providing the upper pot with handle means is advantageous in that it hereby is possible to easily move the entire greenhouse pot around as a single portable unit. This is particularly advantageous in relation to greenhouse pots in that these pots are typically placed in small backyards or on balconies where the need to move then around due to the limited space, to follow the sun and other is more pronounced.

In this context the term "handle means" should be understood as any kind of handle such as any kind of bar, grip, strap, knop or other or any combination thereof suited to hold, lifting and in other ways handling a greenhouse pot.

Also, in this context the term "connection means" should be understood as any kind of connector such as any kind of clamp, lock, strap or other or any combination thereof suited for releasably connecting one or more plant pots to a transparent upper pot.

In an aspect of the invention, the greenhouse pot comprises at least two plant pots in the form of an outer plant pot and at least one inner plant pot arranged inside the outer plant pot.

Forming a plant pot with an outer plant pot and an inner plant pot is advantageous in that the multilayer construction provides redundancy and an insulation effect.

In an aspect of the invention, the inner pot comprises at least one inner pot side protruding upwards from an inner pot bottom and wherein the at least one inner pot side comprises apertures.

Providing the inner pot wall with openings is advantageous in that it hereby is possible to harvest root crops - such as potatoes - through the apertures without removing or damaging the plant - thus, enabling that fresh crops may be harvested over a long period of time.

In an aspect of the invention, the connection means comprises a clamp arranged to releasably hook onto the plant pot and the transparent upper pot.

Forming the connection means as clamps is advantageous in that is hereby possible to use the clamps on standardized pots and it is possible to increase and distribute the clamps according to load and load distribution.

In an aspect of the invention, the connection means comprises a clamp arranged to releasably hook onto the outer plant pot, the inner plant pot and the transparent upper pot.

Forming the clamp so that it may be selectively connected to and released from one, two or all three pots is advantageous in that the clamp hereby enables easy access to the outside of the inner pot (to harvest root crops) and to the inside of the inner pot (to harvest above ground vegetables, to water the plants or other).

In an aspect of the invention, the at least one plant pot side is folded at the top opening to rigidify the plant pot side at the top opening and wherein the at least one upper pot side is folded at the bottom opening to rigidify the upper pot side at the bottom opening. Forming a fold at the edges at the openings of various pots is advantageous in that it is a simple and inexpensive way of rigidifying the pots and ensure that the shape of the openings is maintained.

In an aspect of the invention, the connection means comprises a clamp arranged to releasably hook onto the folded part of the plant pot and the transparent upper pot which is advantageous in that the folded part is rigid.

In an aspect of the invention, the top opening and the bottom opening are formed with substantially the same shape and size to be mutually matching.

Forming the openings so that they match is advantageous in that it enables easy connection of the two and because it enables a better seal.

In an aspect of the invention, the one or more handle means are formed integrally with the transparent upper pot.

Forming the handles integrally with the upper pot is advantageous in that it is inexpensive and provides for simple manufacturing.

In an aspect of the invention, the one or more handle means are formed as one or more separate parts connected to the transparent upper pot.

Forming the handle or handles as separate parts is advantageous in that the handles hereby can be formed in a material more suited for forming handles and in that the separate design enables that a simple joint can be established between the two parts which can enable mutual motion.

In an aspect of the invention, the saucer is formed integrally with the plant pot.

Forming the saucer integrally with the plant pot is advantageous in that it is inexpensive and provides for simple manufacturing.

In an aspect of the invention, the saucer is formed as a separate part connected to the plant pot.

Forming the saucer as a separate part is advantageous in that the saucer hereby can be formed in a material more suited for forming saucers and in that the separate design enables that the saucer may be formed in a separate manufacturing process and then subsequently be connected to a more or less standardised plant pot.

In an aspect of the invention, the plant pot and the transparent upper pot are shaped substantially alike.

Forming the plant pot and the upper pot substantially uniform is advantageous in that they hereby can be formed in the same mould, whereby manufacturing costs can be reduced.

The invention further provides for use of a greenhouse pot according to any of the previously discussed greenhouse pots for growing potatoes.

Using a greenhouse pot according to the present invention for growing potatoes is advantageous in that the present greenhouse pot enables efficient growth and easy access to the potatoes.

### Figures

The invention will be described in the following with reference to the figures in which
- fig. 1.: illustrates cross section through the middle of an embodiment of a greenhouse pot, as seen from the side,
- fig. 2: illustrates a cross section of a cut-out portion of an embodiment of a greenhouse pot, as seen from the side,
- fig. 3: illustrates an embodiment of a connection means, as seen from the side, and
- fig. 4: illustrates an embodiment of a saucer, as seen in perspective.

### Detailed description

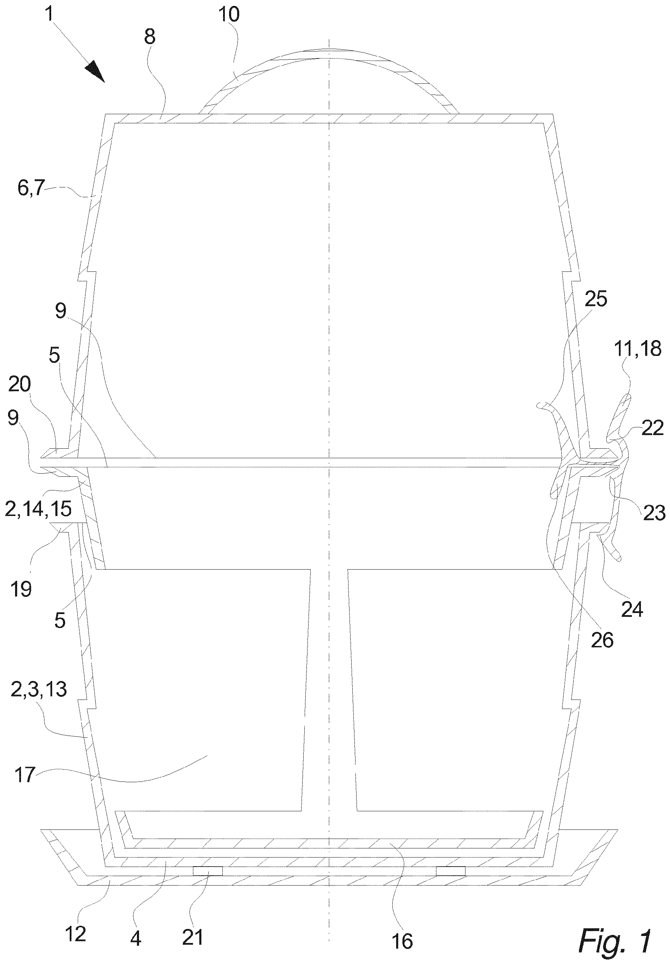

Fig. 1 illustrates cross section through the middle of an embodiment of a greenhouse pot 1, as seen from the side.

In this embodiment the greenhouse pot 1 comprises a plant pot 2 including an inner plant pot 14 and an outer plant pot 13 connected to each other and to a transparent upper pot 6 by means of connection means 11.

In this embodiment, the inner plant pot 14 is provided with apertures 17 in the form of two evenly spaced cut-outs covering a major part of the inner pot side 15. However, in another embodiment the inner plant pot 14 could be provided with apertures 17 of another shape and/or the apertures 17 could be spaced or located differently.

In this embodiment the inner plant pot 14, the outer plant pot 13 and the transparent upper pot 6 have the exact same shape and size because they are all made in the same mould but in another embodiment the plant pot or pots 2 could be made in a different mould than the one used for forming the upper pot 6 and/or the inner plant pot 14 and the outer plant pot 13 could be formed in different moulds.

In this embodiment the sides 3, 15 of the inner plant pot 14 and the outer plant pot 13 are folded at top openings 5 and the upper pot side 7 is folded at the bottom opening 9 and the connection means 11 comprises a clamp 18 arranged to releasably hook onto the folded parts 19, 20 of the plant pots 2, 13, 14 and the transparent upper pot 6. However, in another embodiment the connection means 11 could be arranged to engage holes, indentations, protrusions in or on one or more of the pots 2, 6, 13, 14 and/or the connection means 11 could be arranged to engage one or more of the pots 2, 6, 13, 14 through adhesive, hook and loop fasteners, snap locks, screws of screw arrangements or other.

Thus, in this embodiment the top opening 5 of the plant pot 2 and the bottom opening 9 of the upper pot 6 are formed with substantially the same shape and size to be mutually matching. However, in another embodiment the bottom opening 9 of the upper pot 6 could be larger than the top opening 5 of the plant pot 2 so that the upper pot 6 would overlap the plant pot 2, the top opening 5 of the plant pot 2 and/or the bottom opening 9 of the upper pot 6 could be provided with geometry designed to snap onto or in other ways connect one or more of the pots 2, 6, 13, 14 to one or more of the other pots 2, 6, 13, 14 and/or other.

In this embodiment, the connection means 11 are formed as two clamps 18 arranged on opposite sides of the pot 1, but in another embodiment the connection means 11 could be formed by straps - either elastic or rigid - , flaps on one or more of the pots 2, 6, 13, 14 arranged to interlock with one or more of the other pots 2, 6, 13, 14, other kinds of mutually locking geometry or other and/or the pot 1 could be provided with another number of connection means 11 such as one, three, four, six or even more.

In this embodiment, the connection means 11 are formed fully separate from the pots 2, 6, 13, 14 so that when the connection means 11 are unhooked, the connection means 11 are no longer connected to the pots 2, 6, 13, 14 in any way. However, in another embodiment the connection means 11 or at least parts of the connection means 11 could be connected to one or more of the pots 2, 6, 13, 14, e.g. through a hinge, a joint, a strap or other.

In this embodiment handle means 10 is formed as a single relatively rigid arch handle 11 rigidly connected at the middle of the upper pot top 8 to ensure that the handle 10 is easily accessible and that that the greenhouse pot 1 can be carried by only one hand. However, in another embodiment the handle means 10 could be formed as rigid handle 10 with a different shape - such as rectangular, polygonal or some other more or less complex curve - and/or the greenhouse pot 1 could be provided with more than one handle means 10 such as two, three, four or more, and/or the handle means 10 could be formed lees rigid - e.g. in the form of flaps, straps or the like - and/or the handle means 10 could be formed integrally with the upper pot 6 - e.g. in the form of carrying holes, indentations, protrusions or other - and/or the handle means 10 could also or instead be provided on or in the upper pot sides 7 and/or the handle means 10 could be connected to the upper pot top 8 or the upper pot side 7 through a hinge, a joint, a strap or other enabling that the handle means 10 may be folded away, raised or lowered, tilted or other.

In this embodiment, bottom of the plant pot bottom 4 is connected to a saucer 12, which is provided with spacers 21 formed integrally with the saucer 12 to enable that a free space is formed between the bottom of the plant pot bottom 4 and the upper side of the saucer 12 e.g. to enable that water may accumulate beneath the plant pot bottom 4 - in that holes (not shown) are provided in the plant pot bottom 4 so that excess water may flow out of the bottom of the plant pot 2 and into the saucer 12 and then later be sucked up into the plant pot 2 when water is needed.

In this embodiment, the inner plant pot 14, the outer plant pot 13 and the saucer 12 are all formed in a black, opaque plastic material. However, in another embodiment one or more of these parts 12, 13, 14 could at least partly also or instead be formed from wood or compressed wood, cardboard or compressed cardboard, a compressed natural material such as straw, a composite material or other or any combination thereof.

In this embodiment, the upper pot 6 is formed in a transparent plastic material enabling that the upper pot 6 is at least partly see-through and/or translucent. However, in another embodiment, the upper pot 6 could at least partly also or instead be formed from glass or another transparent material.

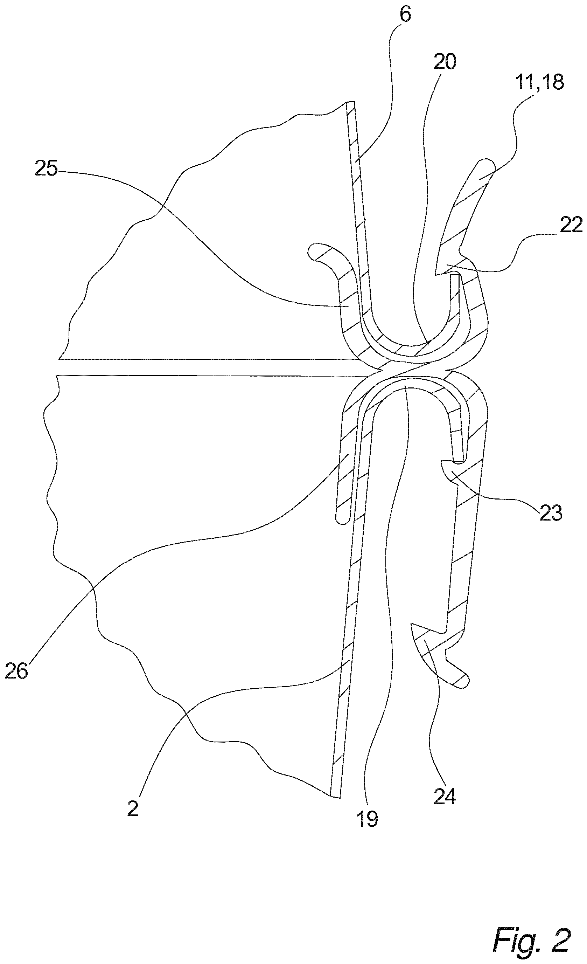

Fig. 2 illustrates a cross section of a cut-out portion of an embodiment of a greenhouse pot 1, as seen from the side.

In this embodiment, the greenhouse pot 1 only comprises a single plant pot 2 but connection means as disclosed in fig. 1 can still be just as functional in connecting only one plant pot 2 and an upper pot 6.

In this embodiment, the clamp 18 is formed with an upper hook 22 arranged to hook onto the upper pot 6 and the clamp 18 is provided with a first lower hook 23 and a second lower hook 24 arranged to hook onto the inner and the outer plant pot 13, 14, respectively. The clamp 18 is further provided with an upper back stop 25 and a lower back stop 26 arranged to ensure that the clamp 18 substantially cannot move laterally - i.e. to ensure that the hooks 22, 23, 24 remains engaged until they are actively disengaged.

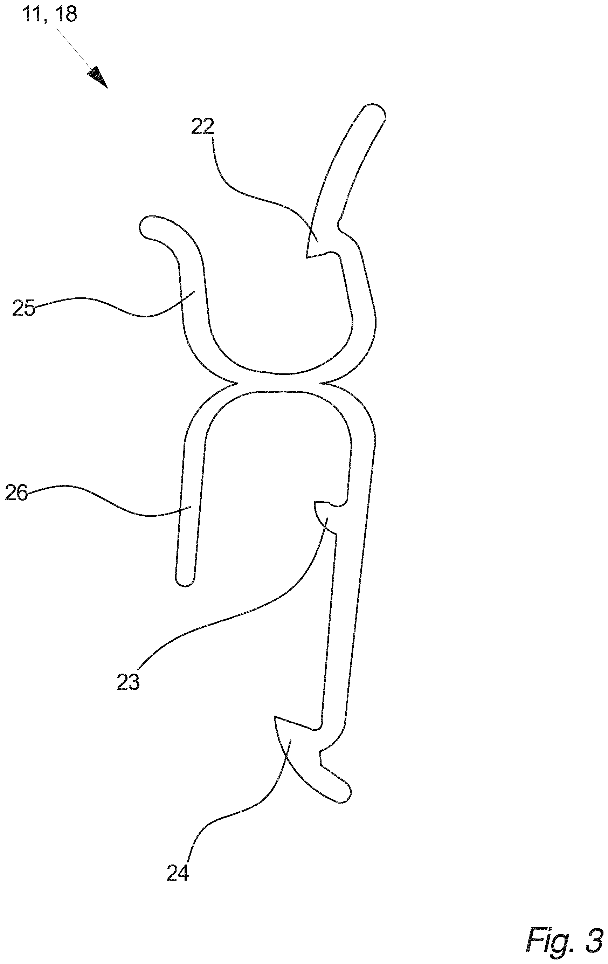

Fig. 3 illustrates an embodiment of a connection means 11, as seen from the side.

In this embodiment, the connection means 11 is a clamp 18 made from plastic in a molding process. However, in another embodiment the connection means 11 could be formed in another material such as metal - e.g. aluminum, stainless steel, steel, wood, a composite material and/or other and/or the connection means 11 could be formed by means of extrusion, forging, machining and/or other.

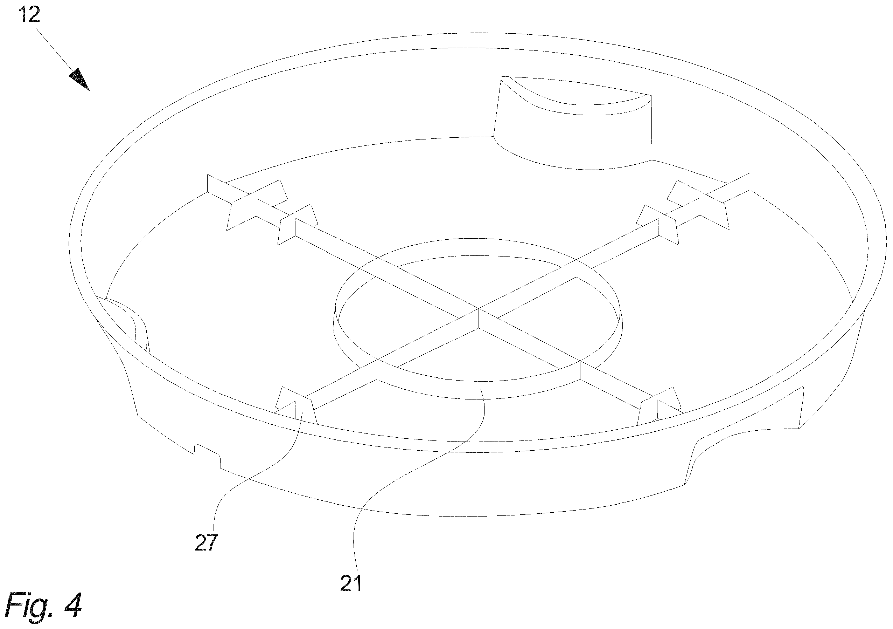

Fig. 4 illustrates an embodiment of a saucer, as seen in perspective.

In this embodiment, the saucer 12 is formed as a separate part arranged to be connected to the plant pot 2 by means of interlocking geometry. In this embodiment, the saucer 12 is provided with flaps 27 arranged to snap into matching recesses in the plant pot bottom but in another embodiment, the saucer 12 could be connected to the plant pot 2 by means of clamps, straps, screws or other or the saucer 12 could be formed integrally with the plant pot 2 during the manufacturing process or it could be permanently attached to the plant pot 2 by means or welding, adhesive or other.

However, it should be understood that the invention is not limited to the particular examples described above but may be designed and altered in a multitude of varieties within the scope of the invention as specified in the claims.

### List

- 1.: Greenhouse pot
- 2.: Plant pot
- 3.: Plant pot side
- 4.: Plant pot bottom
- 5.: Top opening
- 6.: Upper pot
- 7.: Upper pot side
- 8.: Upper pot top
- 9.: Bottom opening
- 10.: Handle means
- 11.: Connection means
- 12.: Saucer
- 13.: Outer plant pot
- 14.: Inner plant pot
- 15.: Inner pot side
- 16.: Inner pot bottom
- 17.: Aperture
- 18.: Clamp
- 19.: Folded part of plant pot
- 20.: Folded part of transparent upper pot
- 21.: Spacer
- 22.: Upper hook
- 23.: First lower hook
- 24.: Second lower hook
- 25.: Upper back stop
- 26.: Lower back stop
- 27.: Flaps

## Claims

1. A greenhouse pot (1) comprising
at least one plant pot (2) including at least one plant pot side (3) protruding upwards from a plant pot bottom (4) to form a pot having a top opening (5),
a transparent upper pot (6) comprising at least one upper pot side (7) protruding downwards from an upper pot top (8) to form a pot having a bottom opening (9), wherein said transparent upper pot (6) is arranger to cover said top opening (5), wherein said transparent upper pot (6) comprises one or more handle means (10),
wherein said greenhouse pot (1) also comprises one or more connection means (11) arranged to releasably connect said plant pot (2) and said transparent upper pot (6), and
a saucer (12) connected to said plant pot (2) at said plant pot bottom (4).

2. A greenhouse pot (1) according to claim 1, wherein said greenhouse pot (1) comprises at least two plant pots (2) in the form of an outer plant pot (13) and at least one inner plant pot (14) arranged inside said outer plant pot (13).

3. A greenhouse pot (1) according to claim 2, wherein said inner plant pot (14) comprises at least one inner pot side (15) protruding upwards from an inner pot bottom (16) and wherein said at least one inner pot side (15) comprises apertures (17).

4. A greenhouse pot (1) according to any of the preceding claims, wherein said connection means (11) comprises a clamp (18) arranged to releasably hook onto said plant pot (2) and said transparent upper pot (6).

5. A greenhouse pot (1) according to any of claim 2 or 3, wherein said connection means (11) comprises a clamp (18) arranged to releasably hook onto said outer plant pot (13), said inner plant pot (14) and said transparent upper pot (6).

6. A greenhouse pot (1) according to any of the preceding claims, wherein said at least one plant pot side (3) is folded at said top opening (5) to rigidify said plant pot side (3) at said top opening (5) and wherein said at least one upper pot side (7) is folded at said bottom opening (9) to rigidify said upper pot side (7) at said bottom opening (9).

7. A greenhouse pot (1) according to claim 6, wherein said connection means (11) comprises a clamp (18) arranged to releasably hook onto said folded part (19, 20) of said plant pot (2) and said transparent upper pot (6).

8. A greenhouse pot (1) according to any of the preceding claims, wherein said top opening (5) and said bottom opening (9) are formed with substantially the same shape and size to be mutually matching.

9. A greenhouse pot (1) according to any of the preceding claims, wherein said one or more handle means (10) are formed integrally with said transparent upper pot (6).

10. A greenhouse pot (1) according to any of the preceding claims, wherein said one or more handle means (10) are formed as one or more separate parts connected to said transparent upper pot (6).

11. A greenhouse pot (1) according to any of the preceding claims, wherein said saucer (12) is formed integrally with said plant pot (2).

12. A greenhouse pot (1) according to any of the preceding claims, wherein said saucer (12) is formed as a separate part connected to said plant pot (2).

13. A greenhouse pot (1) according to any of the preceding claims, wherein said plant pot (2) and said transparent upper pot (6) are shaped substantially alike.

14. Use of a greenhouse pot (1) according to any of the preceding claims for growing potatoes.
